(19) Europäisches Patentamt / European Patent Office / Office européen des brevets

(11) **EP 2 452 060 B1**

(12) **FASCICULE DE BREVET EUROPEEN**

(45) Date de publication et mention
de la délivrance du brevet:
**01.05.2013 Bulletin 2013/18**

(21) Numéro de dépôt: **10738000.8**

(22) Date de dépôt: **11.06.2010**

(51) Int Cl.:
*F02B 37/12* *(2006.01)*     *F02D 37/02* *(2006.01)*
*F02B 39/16* *(2006.01)*     *F02D 41/00* *(2006.01)*
*F02D 23/00* *(2006.01)*

(86) Numéro de dépôt international:
**PCT/FR2010/051176**

(87) Numéro de publication internationale:
**WO 2011/004091 (13.01.2011 Gazette 2011/02)**

(54) **PROCEDE DE CONTROLE D'UN DEBIT D'AIR INJECTE DANS UN MOTEUR, ENSEMBLE COMPRENANT UN CALCULATEUR METTANT EN ŒUVRE LE PROCEDE ET UN VEHICULE COMPRENANT L'ENSEMBLE**

VERFAHREN ZUR STEUERUNG DES IN EINEN MOTOR INJIZIERTEN LUFTSTROMS, ANORDNUNG MIT EINEM COMPUTER ZUR UMSETZUNG DES VERFAHRENS UND FAHRZEUG MIT DER ANORDNUNG

METHOD FOR CONTROLLING AIRFLOW INJECTED IN AN ENGINE, ASSEMBLY INCLUDING A COMPUTER IMPLEMENTING THE METHOD, AND VEHICLE INCLUDING THE ASSEMBLY

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **09.07.2009 FR 0954787**

(43) Date de publication de la demande:
**16.05.2012 Bulletin 2012/20**

(73) Titulaire: **PEUGEOT CITROËN AUTOMOBILES SA**
**78140 Velizy-Villacoublay (FR)**

(72) Inventeur: **GOURVES, Frédéric**
**F-95800 Courdimanche (FR)**

(74) Mandataire: **Renous Chan, Véronique**
**Peugeot Citroen Automobiles SA**
**Propriété Industrielle - LG081**
**18 rue des Fauvelles**
**92250 La Garenne Colombes (FR)**

(56) Documents cités:
**EP-A1- 2 045 455          WO-A1-2005/047669**
**US-A1- 2004 118 117     US-A1- 2009 013 945**

**Description**

La présente invention concerne un procédé de contrôle d'un débit d'air injecté dans un moteur relié à un turbocompresseur. L'invention se rapporte aussi à un ensemble comprenant un calculateur mettant en oeuvre le procédé décrit, ainsi qu'à un véhicule comprenant l'ensemble.

Un moteur d'un véhicule automobile convertit l'énergie issue de la combustion du carburant en énergie mécanique. L'efficacité de la combustion dépend notamment des proportions du mélange entre le carburant et l'air. L'emploi de la suralimentation permet par exemple la combustion de plus de carburant dans le moteur. Un moteur suralimenté est muni d'un turbocompresseur qui permet d'augmenter la densité de l'air admis au niveau de chacun des cylindres. La température de l'air comprimé est généralement réduite pour augmenter le rendement de la suralimentation.

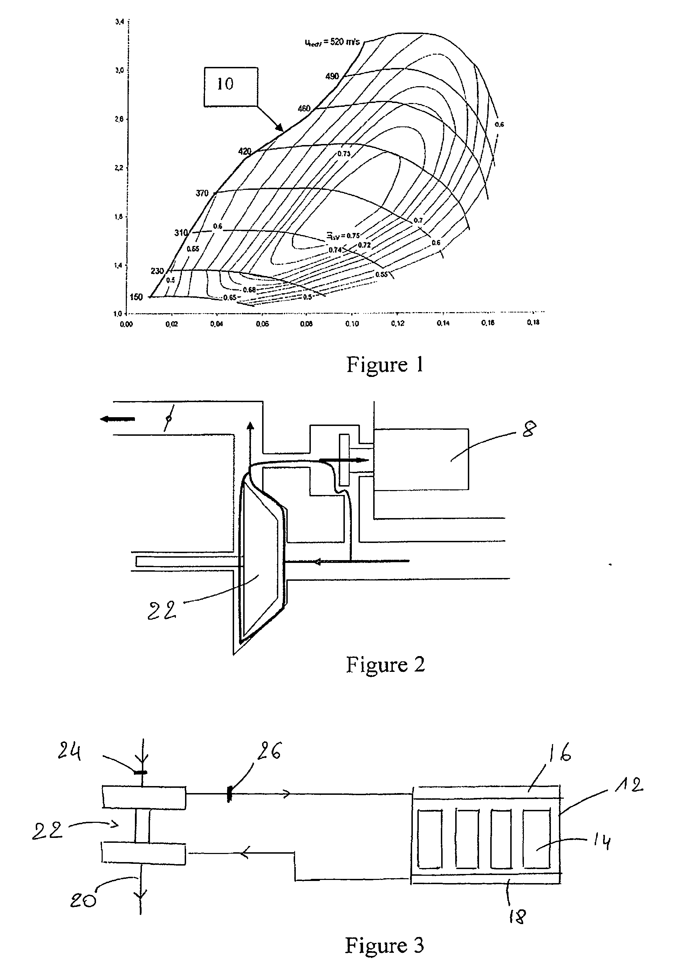

Le turbocompresseur est défini par des champs compresseurs comme illustré par exemple sur la figure 1. Ces champs compresseurs sont des données fournies par les constructeurs de turbocompresseur. Une caractéristique importante des champs compresseurs est la ligne de pompage 10. Sur les faibles débits volumique, en fonction du taux de compression considéré, il apparaît en sortie compresseur des fluctuations de pression, pouvant dans un premier temps être acceptable en transitoire. Si l'on considère des débits volumiques très faibles, ces fluctuations de pression deviennent trop importantes et peuvent remonter jusqu'à l'entrée du compresseur créant alors des instabilités qui se traduisent par des claquements très bruyant. Ce phénomène est destructeur pour le compresseur et audible par le conducteur.

Sur la figure 1, pour un certain taux de compression, le turbocompresseur fonctionne convenablement si le débit volumique appliqué au turbocompresseur est tel que le point de fonctionnement se situe à droite de la courbe ; en revanche si le débit volumique appliqué au turbocompresseur est tel que le point de fonctionnement se situe à gauche de la ligne de pompage 10, le turbocompresseur entre dans un fonctionnement en pompage.

Dans un véhicule, la limite de pompage peut être dépassée lors de la chute rapide de la consigne de couple qui crée alors une chute importante du débit volumique au niveau du compresseur.

Une solution pour éviter de dépasser la limite de pompage est de créer un débit local autour du compresseur afin de réduire la chute de débit au niveau du compresseur. Un tel débit local est créé en utilisant une vanne appelée vanne de décharge (ou « dump valve » en anglais). La figure 2 montre une telle vanne 8 permettant de réinjecter un certain volume depuis la sortie du turbocompresseur 22 vers son entrée.

Mais une telle solution implique un composant supplémentaire qu'est la dump valve, ce qui entraîne un surcoût.

Une autre solution est d'imposer au moteur un débit d'air « limite pompage ». Une telle solution évite le pompage du turbocompresseur et l'utilisation d'une « dump valve » mais ne permet pas de respecter dans toutes les situations de vie la consigne de couple du conducteur.

Il est par ailleurs connu de la demande de brevet US 2004/0118117 un procédé de contrôle commande où l'on détermine un débit d'air de consigne et un débit d'air minimal admissible par un turbocompresseur, et où l'on détermine, si le débit d'air de consigne est inférieur au débit d'air minimal admissible, l'application du débit d'air minimal admissible à l'entrée du turbocompresseur.

Pour cela, l'invention propose un procédé de contrôle d'un débit d'air injecté dans un moteur relié à un turbocompresseur, le procédé comprenant détermination d'un débit d'air de consigne et d'un débit d'air minimal admissible par le turbocompresseur, et si on détermine que le débit d'air de consigne est inférieur au débit d'air minimal admissible par le turbocompresseur, l'application du débit d'air minimal admissible par le turbocompresseur à l'entrée du turbocompresseur caractérisé en ce que le procédé comprend également l'application dans ce cas d'une stratégie de dégradation de l'avance à l'allumage du moteur, et le contrôle de la dégradation de l'avance à l'allumage du moteur en fonction de la comparaison du débit d'air minimal admissible par le turbocompresseur avec le débit d'air maximal correspondant à la dégradation d'avance à l'allumage maximale.

Dans une variante, si le débit d'air maximal correspondant à la dégradation d'avance à l'allumage maximale est supérieur au débit d'air minimal admissible par le turbocompresseur, le débit d'air minimal admissible par le turbocompresseur correspond au débit d'air pour la mise en oeuvre de la stratégie de dégradation.

Dans une variante, si le débit d'air maximal correspondant à la dégradation d'avance à l'allumage maximale est inférieur au débit d'air minimal admissible par le turbocompresseur, le procédé comprend en outre le calcul d'un débit d'air passant directement de l'admission à l'échappement des chambres de combustion.

Dans une variante, le débit d'air passant directement de l'admission à l'échappement correspond à la différence entre le débit d'air minimal admissible par le turbocompresseur et le débit d'air maximal correspondant à la dégradation d'avance à l'allumage maximale.

Dans une variante, appliquée à un moteur comportant des actionneurs de soupapes de distribution, les actionneurs sont commandés en fonction de la comparaison du débit d'air minimal admissible par le turbocompresseur avec le débit d'air maximal correspondant à la dégradation d'avance à l'allumage maximale.

Avantageusement, les soupapes d'admission et d'échappement sont commandées d'une manière telle qu'elles ont une phase d'ouverture commune si le débit d'air maximal correspondant à la dégradation d'avance à l'allumage maximale est inférieur au débit d'air minimal admissible par le turbocompresseur

La présente invention a également pour objet un ensemble comprenant un moteur, un turbocompresseur de compression de l'air injecté dans le moteur, caractérisé en ce que l'ensemble comporte en outre un calculateur adapté à mettre en oeuvre le procédé tel que défini ci-dessus.

Dans une variante, le moteur comporte des actionneurs de soupapes de distribution, les actionneurs étant commandés en fonction de la comparaison du débit d'air minimal admissible par le turbocompresseur avec le débit d'air maximal correspondant à la dégradation d'avance à l'allumage maximale.

Enfin, l'invention a également pour objet un véhicule comprenant un tel ensemble.

D'autres caractéristiques et avantages de l'invention apparaîtront à la lecture de la description détaillée qui suit des modes de réalisation de l'invention, donnés à titre d'exemple uniquement et en références aux dessins qui montrent :

- figure 1, un exemple de champ compresseur ;
- figure 2, une représentation schématique d'une vanne de décharge ;
- figure 3, une représentation schématique d'un ensemble moteur ;
- figure 4, une représentation schématique d'une chambre de combustion ;
- figure 5, des graphiques illustrant l'évolution des différents paramètres pris en compte dans le procédé de contrôle du débit d'air ;
- figure 6, une table de rendement du moteur.

L'invention se rapporte à un procédé de contrôle d'un débit d'air injecté dans un moteur relié à un turbocompresseur. Le procédé comprend la détermination d'un débit d'air de consigne et d'un débit d'air minimal admissible par le turbocompresseur et la détermination que le débit d'air minimal admissible par le turbocompresseur est supérieur au débit d'air de consigne. Le procédé comprend également l'application du débit d'air minimal admissible par le turbocompresseur à l'entrée du turbocompresseur et d'une stratégie de dégradation de l'avance à l'allumage du moteur. Le procédé comprend ensuite le contrôle de la dégradation de l'avance à l'allumage du moteur en fonction de la comparaison du débit d'air minimal admissible par le turbocompresseur avec le débit d'air maximal correspondant à la dégradation d'avance à l'allumage maximale. Le procédé permet d'éviter que le turbocompresseur rentre dans la zone de pompage, en particulier lors de chutes rapides de demande de couple par le conducteur, tout en garantissant le suivi de couple du conducteur.

Le procédé permet ainsi de supprimer la dump valve ainsi que son système de pilotage. Il y a donc un intérêt économique important notamment dans le cas des petits moteurs essence turbocompressés.

Le procédé peut être mis en oeuvre dans un ensemble moteur d'un véhicule tel qu'illustré sur la figure 3. Le véhicule comprend un moteur 12. Le moteur 12 peut être un moteur essence à injection directe ou indirecte. Le moteur comprend une ou plusieurs chambres 14 de combustion situées entre un collecteur 16 d'admission et un collecteur 18 d'échappement. Le collecteur 16 d'admission reçoit de l'air à introduire dans les chambres 14 de combustion. Du carburant est également injecté dans les chambres 14 de combustion généralement par une buse d'injection qui n'est pas représentée sur la figure 3. Le collecteur 18 d'échappement reçoit les émissions de gaz produites par la combustion et les dirige vers une ligne d'échappement 20.

Le véhicule comprend en outre un turbocompresseur 22 de compression de l'air injecté dans le moteur. Le turbocompresseur est de ce fait relié au moteur et délivre de l'air comprimé au collecteur 16 d'admission. Le turbocompresseur 22 permet ainsi d'augmenter la densité de l'air admis au niveau de chacune des chambres de combustion. Cela permet la combustion de plus de carburant ce qui augmente la puissance du moteur.

Le véhicule comporte en outre un calculateur adapté à mettre en oeuvre les étapes du procédé de contrôle d'un débit d'air injecté dans un moteur.

Le procédé comprend la détermination d'un débit d'air de consigne et d'un débit d'air minimal admissible par le turbocompresseur 22. Selon l'action du conducteur du véhicule sur la pédale d'accélération, le couple à fournir par le moteur varie. En conséquence, le débit d'air de consigne demandé varie aussi et est déterminée par le calculateur. Le turbocompresseur 22 permet d'injecter une plus grande quantité d'air si la demande en couple augmente. Si le conducteur relâche la pédale d'accélérateur, la consigne de couple (ou demande en couple) chute et le débit d'air de consigne diminue en conséquence. Comme indiqué en liaison avec la figure 1, le turbocompresseur 22 fonctionne convenablement pour autant que le débit d'air passant par le turbocompresseur 22 est suffisant. En d'autres termes, si le débit d'air de consigne est supérieur au débit d'air minimal admissible par le turbocompresseur 22, ce dernier fonctionne convenablement et la réponse du moteur en fourniture de couple correspond à la demande du conducteur. Cette limite de débit d'air dépend des conditions de température, de pression et des caractéristiques du turbocompresseur.

Toutefois, le turbocompresseur 22 rentre en zone de pompage si le débit d'air passant par le turbocompresseur 22 est en dessous du débit d'air minimal admissible (que l'on peut appeler Cs_Q_Air_Min_Limite_Pompage). Le procédé détermine donc ensuite si le débit d'air de consigne devient inférieur au débit d'air minimal admissible (en particulier lorsque le conducteur relâche la pédale). Alors, pour éviter que le turbocompresseur 22 entre en zone de pompage, le débit d'air appliqué en entrée du turbocompresseur 22 est le débit d'air minimal admissible. Néanmoins, le débit d'air injecté dans le moteur étant fixé au débit d'air minimal admissible, le débit d'air injecté dans le moteur peut être parfois trop important pour respecter la consigne de couple du conducteur. Le couple délivré par un moteur dépendant de la quantité d'air injectée dans les cylindres, le véhicule peut alors continuer à accélérer alors que le conducteur demande l'inverse.

Pour éviter la fourniture d'un couple par le moteur qui soit supérieur à la consigne de couple, le procédé applique une stratégie de dégradation de l'avance à l'allumage du moteur. Ceci permet de dégrader la fourniture du couple du moteur. Le calculateur peut décaler l'angle d'allumage par rapport à l'angle donnant le couple maximal. Plutôt que de provoquer l'allumage et l'inflammation du mélange injecté dans le moteur selon la position angulaire optimum du piston dans la chambre, le calculateur provoque l'allumage à une position angulaire ultérieure du piston. Par exemple, l'allumage peut se produire après le point mort haut du piston dans la chambre de combustion.

La dégradation d'avance à l'allumage permet de suffisamment dégrader le couple si la quantité d'air injectée dans le moteur permet effectivement de dégrader le fonctionnement du moteur. Pour cela, le procédé comprend une étape de contrôle de la dégradation de l'avance à l'allumage du moteur en fonction de la comparaison du débit d'air minimal admissible par le turbocompresseur (Cs_Q_Air_Min_Limite_Pompage) avec le débit d'air maximal correspondant à la dégradation d'avance à l'allumage maximale (que l'on peut appeler Cs_Q_Air_Max_Deg_AA_Max). Le couple délivré par le moteur dépendant de la quantité d'air aspirée par le moteur, la détermination du débit d'air maximal correspondant à la dégradation d'avance à l'allumage maximale permet de savoir la quantité maximale d'air à injecter pour pouvoir dégrader au mieux la fourniture du couple par le moteur. Le calcul du débit d'air maximal correspondant à la dégradation d'avance à l'allumage maximale est décrit plus bas.

Si le débit d'air maximal correspondant à la dégradation d'avance à l'allumage maximale est supérieur au débit d'air minimal admissible par le turbocompresseur, le débit d'air minimal admissible par le turbocompresseur correspond au débit d'air pour la mise en oeuvre de la stratégie de dégradation. Le moteur n'est pas dans une situation de suralimentation d'air par rapport au couple de consigne. Il n'y a donc pas de problème de suivi de la consigne de couple car cela signifie que la dégradation d'avance pourra être suffisante.

En revanche si le débit d'air maximal correspondant à la dégradation d'avance à l'allumage maximale est inférieur au débit d'air minimal admissible par le turbocompresseur, alors une solution consisterait à prioriser l'un ou l'autre des débits avec les conséquences suivantes. Si le débit d'air maximal correspondant à la dégradation d'avance à l'allumage maximale est considéré comme prioritaire (c'est-à-dire que ce débit serait finalement celui appliqué en entrée de turbocompresseur), alors il y a un risque de pompage du turbocompresseur 22. Le point de fonctionnement du turbocompresseur 22 est à gauche de la courbe 10 sur la figure 1 et le risque de destruction du turbocompresseur peut survenir. Inversement, si le débit d'air minimal admissible par le turbocompresseur est considéré comme prioritaire (c'est-à-dire que ce débit serait finalement celui appliqué en entrée de turbocompresseur), alors il y a un risque de non suivi de la consigne de couple du conducteur. Le véhicule peut continuer à accélérer alors que le conducteur demande le contraire.

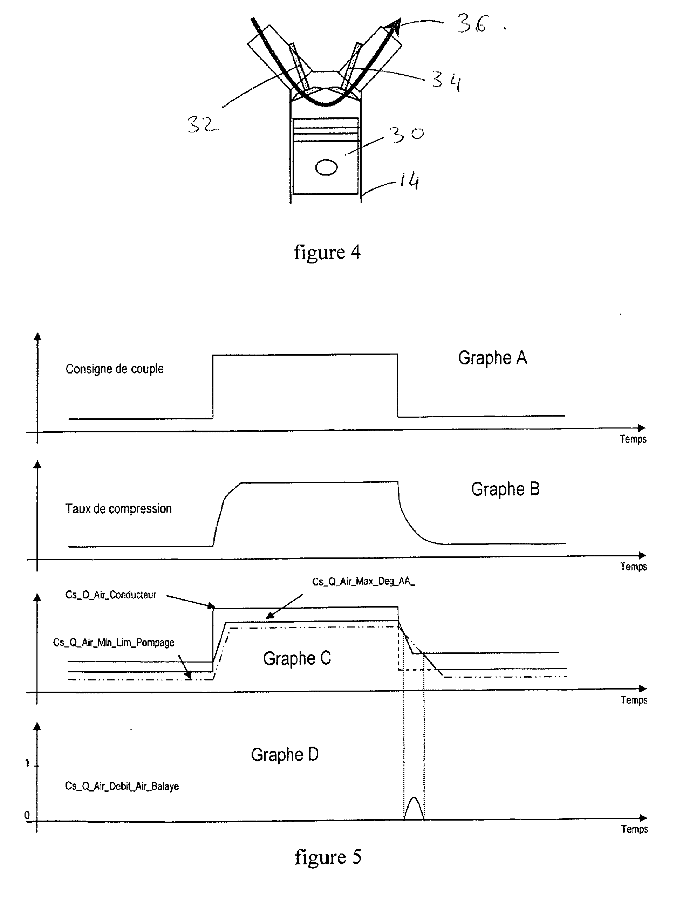

Pour éviter ce choix, le procédé comprend une étape de balayage. Cela est représenté sur la figure 4. Dans un moteur (en particulier dans un moteur essence turbocompressé), il est possible d'implémenter des systèmes de distributions variables tels que des déphaseurs admission ou Valvetronic par exemple. Avec ces systèmes de distribution variable, il est possible de réaliser un débit passant directement de l'admission à l'échappement en maintenant les soupapes d'admission et d'échappement ouvertes en même temps. Ce débit est appelé balayage. Ce débit ne participe pas à la combustion mais peut permettre de refouler la quantité d'air en excès. Ainsi, pour éviter le pompage, le procédé admet dans le turbocompresseur 22 le débit d'air minimal admissible par le turbocompresseur. Un tel débit peut être admis dans les chambres de combustion tout en respectant la dégradation de l'avance à l'allumage grâce au balayage.

La figure 4 montre une chambre de combustion 14, dans laquelle un piston 30 est représenté. La chambre 14 comporte une soupape 32 d'admission et une soupape 34 d'échappement. Par une mise en oeuvre de balayage, le procédé permet le passage d'un débit de fluide depuis l'admission vers l'échappement selon la flèche 36. Lorsque cette stratégie est appliquée dans un moteur à injection directe, l'injection de carburant a lieu dans la chambre de combustion après le balayage ; ainsi, il y a le moins possible d'essence à l'échappement. Des organes de post-traitement de l'essence dans la ligne d'échappement peuvent permettre de traiter l'essence admise à l'échappement, notamment si cette stratégie est appliquée dans un moteur à injection indirecte.

Le débit passant directement de l'admission à l'échappement correspond à la différence entre le débit d'air minimal admissible par le turbocompresseur Cs_Q_Air_Min_Limite_Pompage et le débit d'air maximal correspondant à la dégradation d'avance à l'allumage maximale Cs_Q_Air_Max_Deg_AA_Max. En définitive le débit d'air balayé lorsque Cs_Q_Air_Max_Deg_AA_Max est inférieur à Cs_Q_Air_Min_Limite_Pompage correspond à

$$\max(Cs\_Q\_Air\_Min\_Limite\_Pompage - Cs\_Q\_Air\_Max\_Deg\_AA,0)$$

Ce débit d'air balayé est transformé en consigne sur les actionneurs de la distribution variable de manière couramment utilisée dans les contrôles moteurs.

La figure 5 montre divers graphes schématisant les étapes décrites précédemment. Le graphe A montre l'évolution dans le temps d'une consigne de couple (ou couple de consigne demandée par le conducteur). Sur ce graphe, le conducteur demande subitement un couple plus important en appuyant sur l'accélérateur, puis la demande de couple chute si le conducteur relâche l'accélérateur. Le graphe B montre l'évolution dans le temps du taux de compression du turbocompresseur 22 (correspondant au rapport de la pression en aval sur la pression en amont du turbocompresseur 22), en réponse à la demande du conducteur selon le graphe A. On voit que le taux de compression augmente lorsque la consigne de couple augmente ; ceci traduit une demande en air plus importante.

Toutefois, l'augmentation du taux de compression n'est pas aussi rapide que peut l'être l'augmentation de la consigne de couple. Ceci est dû à l'inertie du turbocompresseur. Une fois que la consigne de couple chute, le taux de compression diminue. Le taux de compression diminue moins rapidement pour la même raison.

Le graphe C compare la variation de la consigne de débit d'air demandée par le conducteur (Cs_Q_Air_ Conducteur) en réponse à la variation de la consigne de couple avec la variation du débit d'air minimal admissible par le turbocompresseur et avec la variation du débit d'air maximal correspondant à la dégradation d'avance à l'allumage maximale. La consigne de débit d'air injectée dans le moteur correspond à la consigne de débit d'air demandée par le conducteur Cs_Q_Air_Conducteur tant que cette dernière est supérieure au débit d'air minimal Cs_Q_Air_Min_Limite_ Pompage.

Toutefois, lorsque le conducteur relâche l'accélérateur, la consigne de débit d'air demandée par le conducteur Cs_Q_Air_Conducteur devient inférieure au débit d'air minimal Cs_O_Air_Min_limite_Pompage. Une stratégie de dégradation d'avance à l'allumage est appliquée et le débit d'air minimal Cs_O_Air_Min_limite_Pompage est appliqué également. Tant que le débit d'air maximal correspondant à la dégradation d'avance à l'allumage maximale Cs_Q_Air_ Max_Deg_AA_Max est supérieur au débit d'air minimal admissible par le turbocompresseur Cs_O_Air_Min_limite_ Pompage, il n'y a pas de problème de suivi de consigne de couple et le turbocompresseur 22 n'est pas en zone de pompage. Lorsque le débit d'air maximal correspondant à la dégradation d'avance à l'allumage maximale Cs_Q_Air_ Max_Deg_AA_Max est inférieur au débit d'air minimal admissible par le turbocompresseur Cs_O_Air_Min_Limite_ Pompage, le graphe D montre qu'au cours de la stratégie de dégradation d'avance à l'allumage, le procédé applique un balayage au sein des chambres de combustion.

Le procédé permet ainsi d'éviter que le turbocompresseur rentre dans la zone de pompage, en particulier lors des chutes rapides de demande de couple par le conducteur tout en garantissant le suivi de couple du conducteur. Pour cela le procédé réalise une saturation de la consigne de débit d'air, en fonction des conditions de pression et des caractéristiques du compresseur, par rapport à la consigne conducteur. Puis le procédé applique une stratégie de dégradation de l'avance à l'allumage et active des actionneurs de distribution variable afin de réaliser un débit de balayage le cas échéant.

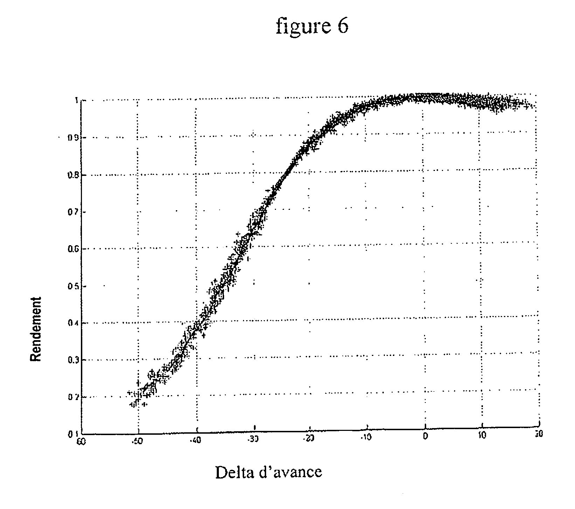

Le calcul du débit d'air maximal correspondant à la dégradation d'avance à l'allumage maximale est maintenant décrit en liaison avec la figure 6. La figure 6 montre une table de rendement du moteur. Cette table de rendement est établie en fonction du delta d'avance correspondant à la différence d'angle entre une avance à l'allumage optimale et une avance à l'allumage la plus dégradée possible. Cette table de rendement à une allure parabolique. Par exemple, sur la figure 6, plus le delta d'avance se rapproche d'une valeur nulle, c'est-à-dire, moins il y a de décalage angulaire entre l'avance à l'allumage optimale et l'avance à l'allumage la plus dégradée possible, plus le rendement du moteur sera proche de son maximum de 1. En revanche plus le delta d'avance est grand (en valeur absolue - lorsque l'on se déplace vers la gauche sur l'axe des abscisses), plus le rendement du moteur sera dégradé. La dégradation pour une certaine avance à l'allumage AA peut s'exprimer en rendement d'avance par la relation suivante :

$$\eta_{Avance} = \frac{Couple\_réalisé}{Couple\_AA\_Opti} = table\_rendement(AA - AA_{opti})$$

avec

- ● Couple_réalisé, le couple effectif fourni par le moteur avec l'avance à l'allumage AA,
- ● Couple_AA_opti, le couple optimal si l'avance à l'allumage était optimale, et
- ● AA-AAopti, le delta d'avance de la figure 6.

Si on cherche à ce que l'avance à l'allumage AA soit la plus dégradée possible, pour respecter la consigne de couple du conducteur, on peut définir le rendement d'avance minimal que le moteur peut réaliser avec l'avance à l'allumage la plus dégradée possible (ou en d'autres termes avec l'avance à l'allumage minimale AAmin) que l'on peut lui appliquer :

$$\eta_{AA\min} = \frac{Couple\_\min}{Couple\_AA\_Opti} = table\_rendement(AA_{\min} - AA_{opti})$$

- avec Couple_min, le couple minimum fourni par le moteur,
- Couple_AA_opti, le couple optimal si l'avance à l'allumage est optimale, et
- AAmin-AAopti, le delta d'avance de la figure 6 le plus important en valeur absolue.

La dégradation maximale obtenue à l'avance à l'allumage minimale dépend de la qualité de combustion du moteur et donc de la quantité d'air aspiré par ce dernier dans ses cylindres. La dégradation maximale sera respectée si le débit d'air injecté correspond à l'avance à l'allumage minimal souhaité. La consigne de couple sur l'air maximal pour respecter le couple demandé par le conducteur est alors :

$$Cs\_CM\_Air\_Max = \frac{Cs\_CM\_conducteur}{\eta_{AA\min}}$$

- avec Cs_CM_Air_Max, la consigne de couple sur l'air maximal donnant la dégradation d'avance maximum et
- Cs_CM_conducteur, le couple de consigne demandé par le conducteur.

Cette consigne sur la boucle d'air peut être ensuite traduite en la consigne de débit d'air maximal correspondant à la dégradation d'avance à l'allumage maximale Cs_Q_Air_Max_Deg_AA_Max (ou consigne de remplissage en air) par des formules de conversion couramment utilisées dans les contrôles moteurs.

**Revendications**

1. Un procédé de contrôle d'un débit d'air injecté dans un moteur relié à un turbocompresseur, le procédé comprenant :
   - la détermination d'un débit d'air de consigne et d'un débit d'air minimal admissible par le turbocompresseur, - et, si on détermine que le débit d'air de consigne est inférieur au débit d'air minimal admissible par le turbocompresseur, l'application du débit d'air minimal admissible par le turbocompresseur à l'entrée du turbocompresseur, **caractérisé en ce que** ledit procédé comprend également : - l'application dans ce cas d'une stratégie de dégradation de l'avance à l'allumage du moteur, - et le contrôle de la dégradation de l'avance à l'allumage du moteur en fonction de la comparaison du débit d'air minimal admissible par le turbocompresseur avec le débit d'air maximal correspondant à la dégradation d'avance à l'allumage maximale.

2. Le procédé selon la revendication 1, **caractérisé en ce que** si le débit d'air maximal correspondant à la dégradation d'avance à l'allumage maximale est supérieur au débit d'air minimal admissible par le turbocompresseur, le débit d'air minimal admissible par le turbocompresseur correspond au débit d'air pour la mise en oeuvre de la stratégie de dégradation.

3. Le procédé selon la revendication 1 ou la revendication 2, **caractérisé en ce que** si le débit d'air maximal correspondant à la dégradation d'avance à l'allumage maximale est inférieur au débit d'air minimal admissible par le turbocompresseur, le procédé comprend en outre le calcul d'un débit d'air passant directement de l'admission à l'échappement des chambres de combustion.

4. Le procédé selon la revendication 3, **caractérisé en ce que** le débit d'air passant directement de l'admission à l'échappement correspond à la différence entre le débit d'air minimal admissible par le turbocompresseur et le débit d'air maximal correspondant à la dégradation d'avance à l'allumage maximale.

5. Le procédé selon l'une des revendications précédentes, appliqué à un moteur comportant des actionneurs de soupapes de distribution, **caractérisé en ce que** les actionneurs sont commandés en fonction de la comparaison du débit d'air minimal admissible par le turbocompresseur avec le débit d'air maximal correspondant à la dégradation d'avance à l'allumage maximale.

6. Le procédé selon la revendication 5, **caractérisé en ce que** les soupapes d'admission et d'échappement sont commandées d'une manière telle qu'elles ont une phase d'ouverture commune si le débit d'air maximal correspondant à la dégradation d'avance à l'allumage maximale est inférieur au débit d'air minimal admissible par le turbocompresseur

7. Un ensemble comprenant un moteur (12), un turbocompresseur (22) de compression de l'air injecté dans le moteur, **caractérisé en ce que** l'ensemble comporte en outre un calculateur adapté à mettre en oeuvre le procédé selon l'une des revendications 1 à 6.

8. L'ensemble selon la revendication 7, **caractérisé en ce que** le moteur comporte des actionneurs de soupapes de distribution, les actionneurs étant commandés en fonction de la comparaison du débit d'air minimal admissible par le turbocompresseur avec le débit d'air maximal correspondant à la dégradation d'avance à l'allumage maximale.

9. Un véhicule comprenant l'ensemble selon la revendication 7 ou la revendication 8.

**Claims**

1. A method for controlling airflow injected in an engine connected to a turbocharger, the method comprising:- the determining of a set value airflow and a minimum airflow acceptable for the turbocharger, - and, if it is determined that the set value airflow is lower than the minimum airflow acceptable for the turbocharger, the applying of the minimum airflow acceptable for the turbocharger to the input of the turbocharger, **characterized in that** the said method also comprises:- the applying in this case of a strategy of delaying the spark advance of the engine , - and the controlling of the spark advance delay of the engine as a function of the comparison of the minimum airflow acceptable for the turbocharger with the maximum airflow corresponding to the maximum spark advance delay.

2. The method according to Claim 1, **characterized in that** if the maximum airflow corresponding to the maximum spark advance delay is greater than the minimum airflow acceptable for the turbocharger, the minimum airflow acceptable for the turbocharger corresponds to the airflow for implementing the delay strategy.

3. The method according to Claim 1 or Claim 2, **characterized in that** if the maximum airflow corresponding to the maximum spark advance delay is lower than the minimum airflow acceptable for the turbocharger, the method further comprises the calculation of an airflow passing directly from the intake to the exhaust of the combustion chambers.

4. The method according to Claim 3, **characterized in that** the airflow passing directly from the intake to the exhaust corresponds to the difference between the minimum airflow acceptable for the turbocharger and the maximum airflow corresponding to the maximum spark advance delay.

5. The method according to one of the preceding claims, applied to an engine comprising actuators of distributor valves, **characterized in that** the actuators are controlled as a function of the comparison of the minimum airflow acceptable for the turbocharger with the maximum airflow corresponding to the maximum spark advance delay.

6. The method according to Claim 5, **characterized in that** the intake and exhaust valves are controlled such that they have a common opening phase if the maximum airflow corresponding to the maximum spark advance delay is lower than the minimum airflow acceptable for the turbocharger.

7. An assembly including an engine (12), a turbocharger (22) for compression of the air injected in the engine, **characterized in that** the assembly further comprises a computer suitable to implement the method according to one of Claims 1 to 6.

8. The assembly according to Claim 7, **characterized in that** the engine comprises actuators of distributor valves, the actuators being controlled as a function of the comparison of the minimum airflow acceptable for the turbocharger with the maximum airflow corresponding to the maximum spark advance delay.

9. A vehicle including the assembly according to Claim 7 or Claim 8.

**Patentansprüche**

1. Steuerverfahren eines Luftstroms, der in einen Motor, der mit einem Turboverdichter verbunden ist injiziert wird, wobei das Verfahren aufweist: - das Bestimmen eines Sollluftstroms und eines Mindestluftstroms, der für den Turboverdichter zulässig ist, - und, wenn bestimmt wird, dass der Sollluftstrom niedriger ist als der von dem Turboverdichter zulässige Mindestluftstrom, Anlegen des von dem Turboverdichter zulässigen Mindestluftstroms an den Einlass des Turboverdichters, **dadurch gekennzeichnet, dass** das Verfahren auch aufweist: - die Anwendung in diesem Fall einer Degradationsstrategie der Zündvorstellung des Motors und die Steuerung der Vorstellungsdegradation beim Zünden des Motors in Abhängigkeit von dem Vergleich des von dem Turboverdichter zulässigen Mindestluftstroms mit dem maximalen Luftstrom, der der maximalen Vorstellungsdegradation beim Zünden entspricht.

2. Verfahren nach Anspruch 1, **dadurch gekennzeichnet, dass**, wenn der maximale Luftstrom, der der maximalen Vorstellungsdegradation beim Zünden entspricht, größer ist als der von dem Turboverdichter zulässige Mindestluftstrom, der von dem Turboverdichter zulässige Mindestluftstrom dem Luftstrom für die Umsetzung der Degradationsstrategie entspricht.

3. Verfahren nach Anspruch 1 oder Anspruch 2, **dadurch gekennzeichnet, dass**, wenn der maximale Luftstrom, der der maximalen Vorstellungsdegradation beim Zünden entspricht, kleiner ist als der von dem Turboverdichter zulässige maximale Luftstrom, das Verfahren ferner die Berechnung eines Luftstroms aufweist, der direkt von dem Einlass zu dem Auspuff der Brennkammern durchgeht.

4. Verfahren nach Anspruch 3, **dadurch gekennzeichnet, dass** der Luftstrom, der direkt von dem Einlass zu dem Auspuff durchgeht, dem Unterschied zwischen dem von dem Turboverdichter zulässigen Mindestluftstrom und dem maximalen Luftstrom, der der maximalen Vorstellungsdegradation beim Zünden entspricht, entspricht.

5. Verfahren nach einem der vorhergehenden Ansprüche, das an einen Motor angewandt wird, der Stellglieder von Ausgabeventilen aufweist, **dadurch gekennzeichnet, dass** die Stellglieder in Abhängigkeit von dem Vergleich des von dem Turboverdichter zulässigen Mindestluftstroms mit dem maximalen Strom, der der maximalen Vorstellungsdegradation beim Zünden entspricht, gesteuert werden.

6. Verfahren nach Anspruch 5, **dadurch gekennzeichnet, dass** die Ausgabe- und Auspuffventile derart gesteuert werden, dass sie eine gemeinsame Öffnungsphase haben, wenn der maximale Luftstrom, der der maximalen Vorstellungsdegradation beim Zünden entspricht, kleiner ist als der von dem Turboverdichter zulässige Mindestluftstrom.

7. Einheit, die einen Motor (12), einen Turboverdichter (22) zum Verdichten der Luft, die in den Motor injiziert wird, aufweist, **dadurch gekennzeichnet, dass** die Einheit ferner einen Rechner aufweist, der angepasst ist, um das Verfahren nach einem der Ansprüche 1 bis 6 umzusetzen.

8. Einheit nach Anspruch 7, **dadurch gekennzeichnet, dass** der Motor Stellglieder von Ausgabeventilen aufweist, wobei die Stellglieder in Abhängigkeit von dem Vergleich des von dem Turboverdichter zulässigen Mindestluftstroms mit dem maximalen Luftstrom, der der maximalen Vorstellungsdegradation beim Zünden entspricht, gesteuert werden.

9. Fahrzeug, das die Einheit nach Anspruch 7 oder Anspruch 8 aufweist.

Figure 1

Figure 2

Figure 3

figure 4

figure 5

figure 6

**EP 2 452 060 B1**

**RÉFÉRENCES CITÉES DANS LA DESCRIPTION**

**Documents brevets cités dans la description**

- US 20040118117 A